(19) Europäisches Patentamt
European Patent Office
Office européen des brevets

(11) Veröffentlichungsnummer: **0 410 028 A1**

(12) **EUROPÄISCHE PATENTANMELDUNG**

(21) Anmeldenummer: 89113639.2

(22) Anmeldetag: 25.07.89

(51) Int. Cl.⁵: **G09B 23/00**, G06K 15/22, B44B 1/04

(43) Veröffentlichungstag der Anmeldung:
30.01.91 Patentblatt 91/05

(84) Benannte Vertragsstaaten:
AT BE CH DE ES FR GB GR IT LI LU NL SE

(71) Anmelder: CONDAT GMBH
Maximilianstrasse 28
D-8069 Scheyern-Fernhag(DE)

(72) Erfinder: Thoma, Klaus, Dr.
Condat GmbH Maximilianstrasse 28
D-8069 Scheyern-Fernhag(DE)
Erfinder: Kiermeir, Josef, Dipl.-Math.
Condat GmbH Maximilianstrasse 28
D-8069 Scheyern-Fernhag(DE)

(54) Anlage zur dreidimensionalen Darstellung von Bauteilen insbesondere Modellen.

(57) Mit der dreidimensionalen CAD-Software können im Computer (1) Bauteile dreidimensional konstruiert werden. Soll dieses Bauteil in Hardware als Modell vorliegen, so ist die manuelle Fertigung gemäß Konstruktionszeichnung unerläßlich. Mit dem vorgeschlagenem Modelltisch (3) mit positionierbaren Stellelementen (6) ist die direkte Wiedergabe des Bauelementes als Modell oder als Form möglich. Durch Nachmodellieren von Hand wird das Bauteil optimiert und anschließend zurück in den Computer gespeichert. Die so gewonnenen Daten können dann für die NC-gesteuerte Fertigung dieses Bauteils genutzt werden. Die Anfertigung eines teueren Modelles in Holz oder Kunststoff kann hierbei entfallen.

Fig. 1

EP 0 410 028 A1

Anlage zur Darstellung von dreidimensionalen Bauelementen insbesonders von Modellen.

Die Anmeldung bezieht sich auf eine Anlage zur Darstellung von dreidimensionalen Bauelementen insbesonders Modellen entsprechend den im Oberbegriff des Anspruchs 1 angegebenen Merkmalen. Mit der dreidimensionalen CAD-Software können in einem Computer dreidimensionale Bauelemente oder Körper (z.B. Autokarosserien oder Teile davon, wie Kotflügel oder Heckpartie, Tragflächenprofile von Flugzeugen, Turbinenleitschaufeln, Schiffschrauben, etc.) konstruiert werden. Nach einem im Computer erstellten Entwurf wird ein gegenständliches Modell aus Holz oder Plastelin durch eigens dafür ausgebildete Modellbauer erstellt. In aller Regel werden an diesem Modell Änderungen gegenüber dem Computerentwurf durchgeführt.

Um die im Computer gespeicherten Daten entsprechend korrigieren zu können, ist es erforderlich, das abgewandelte Holzmodell mit einer dreidimensionalen Vermessungsmaschine abzutasten und die Meßdaten in den Computer einzulesen und in die CAD-Daten zu integrieren. Die Änderungen am Holzmodell können also nur mit einem vergleichsweise großen Aufwand als CAD-Daten in korrigierter Form gespeichert werden.

In der DE 3544789A1 wird eine Anlage zur Darstellung eines dreidimensionalen Objektes in Verbindung mit einem Computer vorgeschlagen. Die Darstellung geschieht jedoch nicht in einem Holzmodell, wie es in der Regel als unerläßlich angesehen wird, sondern in verschiedenen Ansichten auf mehreren Bildschirmen. Es kann also mit jener Anlage kein gegenständliches Modell erzeugt werden.

Der Erfindung liegt die Aufgabe zugrunde, eine Anlage vorzuschlagen, durch die es möglich wird, auf einfache Weise ein gegenständliches Modell zu erzeugen und Änderungen an diesem Modell einfach und schnell auf die CAD-Daten zu übertragen.

Diese Aufgabe wird durch die im Kennzeichen des Anspruchs 1 angegebenen Merkmale gelöst.

Die Erfindung macht Gebrauch von Standardsoftwareprogrammen, durch die bestimmte im Computer in Koordinatenform gespeicherte Punkte auf der Oberfläche von Bauelementen durch Bearbeitungswerkzeuge z.B. von NC-Maschinen angefahren werden können.

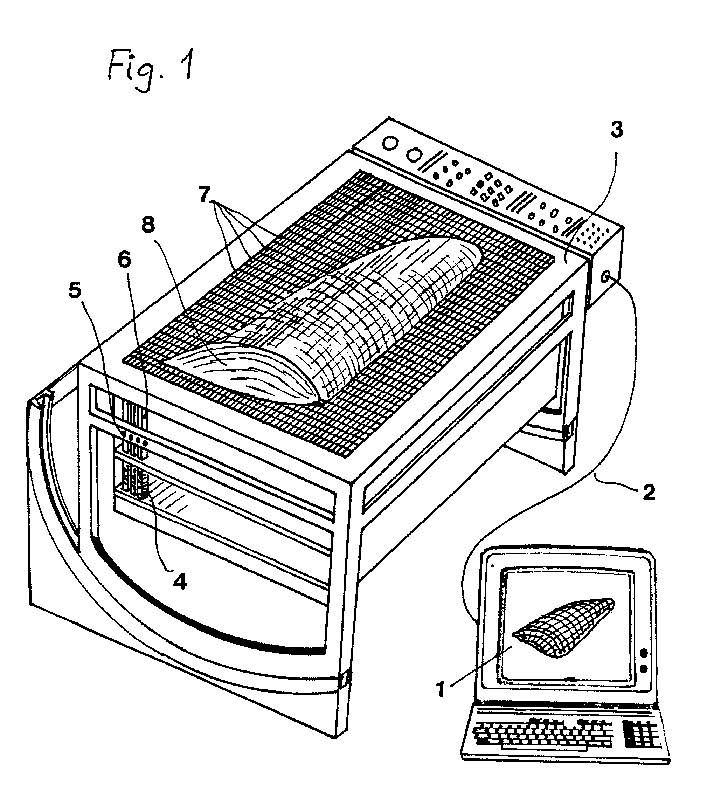

Diese Positionierungsmöglichkeit wird bei der Erfindung dazu benutzt, die einzelnen Elemente auf dem Modelltisch so zu verfahren, daß ihre freien Enden die Oberflächenkontur des Modells nachbilden (Fig. 1). Sind nun Veränderungen am Modell durchzuführen, werden die Elemente lediglich von Hand verstellt. Diese Stellungsänderung wird nun über die Weggeber und die Positionskoordinaten umgewandelt und die Datenkorrektur der CAD-Daten wird unmittelbar vorgenommen.

Durch entsprechende Skalierung und Fensterauswahl in der CAD-Software kann wahlweise das gesamte Bauteil am Modelltisch dargestellt werden oder es kann ein besonders interessierender Teilbereich in Feinauflösung modelliert werden.

Gemäß den Merkmalen des Anspruchs 2 können die freien Enden der Elemente miteinander durch eine elastische Folie verbunden sein, so daß eine abgerundete Kontur entsteht.

Die Erfindung wird nachfolgend anhand eines in Fig. 1 dargestellten Ausführungsbeispiels näher erläutert.

Der Computer 1 weist ein Verbindungskabel 2 zum Modelltisch 3 auf. Über dieses Kabel 2 laufen die Signale vom Computer 1 zu den Positionierantrieben 4 und Weggebern 5 der Stäbe 6 mit geeigneten prismatischen Querschnitt. Die freien Enden 7 dieser Stäbe sind miteinander durch eine elastische Folie 8 verbunden, die die durch die freien Enden 7 der Stäbe 6 gebildete Kontur glättet. Wird die vom Computer eingestellte Lage der Stäbe 6 verändert, so wird die neue Position des freien Endes über das Verbindungs kabel direkt an den Computer zurückgemeldet und durch die verwendete Software werden die CAD-Daten entsprechend korrigiert. Diese korrigierten CAD-Daten können dann wiederum in eine rechnergesteuerte Bearbeitungsmaschine eingegeben werden, um ein Modell bzw. eine Form anzufertigen. Mit Hilfe dieser Erfindung ergibt sich die Möglichkeit von der 3DKonstruktion am Bildschirm direkt auf kürzestem Wege zum Modell mit Korrekturmöglichkeit zu kommen. Bestehende aber noch nicht programmierte Bauteile in Hardware können auf dem umgekehrten Wege über den Negativabdruck auf dem Modelltisch aufgenommen werden. Eine 3D-Meßmaschine zum Aufnehmen der Koordinaten ist somit nicht mehr nötig.

## Ansprüche

1. Anlage zur dreidimensionalen Darstellung von Bauteilen insbesonders von Modellen mit einem elektronischen Rechner (Computer), in dem mit Hilfe eines CAD-Programms dreidimensionale Bauelemente entworfen werden können und auf der mit Hilfe von Standardsoftwareprogrammen in Koordinatenform gespeicherte Punkte auf der Oberfläche von Bauelementen durch Bearbeitungswerkzeuge z.B. von NC-Maschinen angefahren werden können,

**dadurch gekennzeichnet,** daß der Computer 1 über ein Kabel 2 mit einem Modelltisch 3 verbunden ist, an dem eine Vielzahl von geometrisch regelmäßig ausgebildeten Elementen 6 angeordnet ist, denen Positionierantriebe 4 und Weggeber 5 zugeordnet sind und daß die Elemente über die Positionierantriebe derart vom Computer ansteuerbar sind, daß ihre freien Enden 7 in eine Stellung gebracht werden, die dann zusammen analog zur CAD-Darstellung auf dem Bildschirm die Außenkontur des darzustellenden Bauelementes bilden.

2. Anlage nach Anspruch 1 daduch gekennzeichnet, daß die freien Enden 7 der Elemente 6 untereinander durch eine elastische Folie 8 verbunden sind.

Fig. 1

Europäisches Patentamt

**EUROPÄISCHER RECHERCHENBERICHT**

Nummer der Anmeldung

EP    89 11 3639

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4575330 (HULL) <br> * das ganze Dokument * <br> --- | 1 | G09B23/00 <br> G06K15/22 <br> B44B1/04 |
| Y | DE-U-8611317 (WELK D.) <br> * das ganze Dokument * <br> --- | 1 | |
| A | US-A-4749347 (VALAVAARA) <br> * das ganze Dokument * <br> --- | 1 | |
| A | US-A-2999634 (F.E. WALKER) <br> * das ganze Dokument * <br> --- | 1-2 | |
| A | US-A-4527783 (COOLORA ET AL.) <br> * Spalte 4, Zeile 4 - Spalte 6, Zeile 66; Figuren 1-4 * <br> --- | 1 | |
| A | EP-A-250121 (SCITEX CORP.) <br> * Spalte 9, Zeile 28 - Spalte 13, Zeile 39; Figuren 1-4 * <br> --- | 1 | |
| A | PROCEEDINGS OF THE SID. <br> vol. 14, no. 3, 1973, LOS ANGELES US <br> Seiten 99 - 101; s. cordell: <br> "Three dimensional computer display" <br> * das ganze Dokument * <br> --- | 1 | **RECHERCHIERTE SACHGEBIETE (Int. Cl.5)** <br><br> G09B <br> G06K <br> B44B |
| A | FR-A-2583333 (COMPAGNIE INDUSTRIELLE DES LASERS CILAS ALCATEL) <br> * das ganze Dokument * <br> --- | 1 | B43L <br> G06F <br> B29C |
| A | DE-A-3711470 (FRAUNHOFER-GESELLSCHAFT ZUR FORDERUNG DER ANGEWANDTEN FORSCHUNG) <br> * Spalte 2, Zeile 3 - Spalte 3, Zeile 45; Figuren 1-5 * <br> --- | 1 | |
| A | PATENT ABSTRACTS OF JAPAN <br> vol. 12, no. 291 (E-644) 5 September 1986, <br> & JP-A-63 065795 (GERUMA KK) 24 März 1988, <br> * das ganze Dokument * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 27 DEZEMBER 1989 | GYSEN L.A.D. |